# EUROPÄISCHE PATENTSCHRIFT

(11) **EP 3 876 123 B1**
(45) Veröffentlichungstag und Bekanntmachung des Hinweises auf die Patenterteilung: **26.07.2023**
(21) Anmeldenummer: 20160996.3
(22) Anmeldetag: 04.03.2020
(51) Int. Cl.: G06F 21/57

(54) **ANORDNUNG UND BETRIEBSVERFAHREN FÜR EINEN SICHEREN HOCHFAHRABLAUF EINER ELEKTRONISCHEN EINRICHTUNG**
ARRANGEMENT AND OPERATING METHOD FOR A SECURE START-UP OF AN ELECTRONIC DEVICE
AGENCEMENT ET PROCÉDÉ DE FONCTIONNEMENT POUR UN DÉMARRAGE SÉCURISÉ D'UN DISPOSITIF ÉLECTRONIQUE

(43) Veröffentlichungstag der Anmeldung: 08.09.2021
(73) Patentinhaber: Siemens Aktiengesellschaft, 80333 München (DE)
(72) Erfinder: Aschauer, Hans, 81829 München (DE); Falk, Rainer, 85586 Poing (DE); Feist, Christian Peter, 80689 München (DE); Papagudi Subrahmanyam, Niranjana, 81829 München (DE)
(74) Vertreter: Siemens Patent Attorneys

(56) Entgegenhaltungen:
- WO-A1-2017/005410
- US-A1- 2015 012 737
- US-B1- 9 230 112

## Beschreibung

### Technisches Gebiet

Die vorliegende Erfindung betrifft allgemein das Gebiet der elektronischen Systeme und Schaltanordnungen, insbesondere der integrierten, elektronischen Schaltungen wie z.B. anwendungsspezifische integrierte Schaltungen (ASICs) oder Field Programmable Gate Arrays (FPGAs). Im Speziellen bezieht sich die vorliegende Erfindung auf einen Halbleiterbaustein bzw. ein Betriebsverfahren für einen sicheren Hochfahrablauf einer elektronischen Einrichtung, z.B. einem (IOT-)Gerät oder einen Controller. Die elektronische Schaltanordnung, vorzugsweise ein Halbleiterbaustein umfasst hierbei vor allem wenigstens eine Prozessoreinheit, ein Bussystem, gegebenenfalls eine interne Speichereinheit (z.B. Cache, Flash Memory, ROM) und zumindest eine Schnittstelle zum Anbinden einer externen Speichereinheit (RAM) und zumindest eine Konfigurationsschnittstelle für einen Konfigurationszugriff von Extern.

### Stand der Technik

Ein Hochfahrablauf einer elektronischen Einrichtung, welcher auch als Booten oder Boot-Vorgang bezeichnet wird, bezeichnet üblicherweise ein Laden von beispielsweise systemrelevanten Anwendungen (z.B. Betriebssystem, etc.), wie es z.B. nach einem Einschalten einer elektronischen Einrichtung erforderlich ist. So wird bei einem Computer beispielsweise das Laden des so genannten Betriebssystems als Booten bzw. als Hochfahrablauf bezeichnet. Bei einem Gerät, in dem eine elektronische Schaltanordnung z.B. ein Halbleiterbaustein verbaut sein kann, wird beispielsweise beim Einschalten bzw. beim Hochfahrablauf eine Konfiguration von einem externen, seriellen Speicher (z.B. Flash-Speicher, etc.) in einen Arbeitsspeicher geladen und ausgeführt.

Dieser Systemstart bzw. Hochfahrablauf oder Boot-Vorgang wird bei einer elektronischen Einrichtung üblicherweise in mehreren Stufen durchgeführt. Nach einem Einschalten der elektronischen Schaltung wird zunächst in einer ersten Stufe ein einfaches Programm - ein so genannter Boot-Code - als erstes Hochfahrprogramm aus einem kleinen Speicher wie z.B. einem Festwertspeicher oder Read-Only-Memory (ROM), welcher innerhalb der elektronischen Einrichtung angebracht ist, gelesen und dann von einer Prozessoreinheit der elektronischen Schaltanordnung ausgeführt. Von diesem ersten Hochfahrprogramm wird dann wiederum in einer zweiten Stufe von einem externen Speicher, welcher beispielsweise als so genannter Flash-Speicher ausgeführt sein kann, ein zweites Hochfahrprogramm - ein so genannter "Second Level"-Boot-Code - in einen internen Speicher, welcher zur Prozessoreinheit gehört, geladen. Das zweite Hochfahrprogramm wird dann in einer dritten Stufe aus dem internen Speicher heraus ausgeführt. Dadurch wird eine Anwendungslogik bzw. eine eigentliche Applikation aus einem externen Massenspeicher wie z.B. aus einer Secure Digital- bzw. SD-Karte, etc. in den internen Speicher geladen. Im Folgenden wird dann die Anwendung in der elektronischen Einrichtung gestartet.

Wird nun ein Inhalt des externen Speichers bzw. des externen Massenspeichers manipuliert oder gehackt, so kann dies nachteilige oder negative Folgen für das elektronische System haben und/oder ein Sicherheitsrisiko darstellen. So kann beispielsweise eine fehlerhafte Anwendung, welche absichtlich manipuliert oder nur mangelhaft ausgeführt worden ist, in die elektronische Einrichtung geladen werden und zu Sicherheitsproblemen und/oder zu Fehlfunktionen der elektronischen Einrichtung führen. Weiterhin können beispielsweise in der elektronischen Einrichtung gesperrte Funktionen, welche z.B. für höherwertige Produkte oder Einsatzmöglichkeiten des elektronischen Systems vorgesehen sind, absichtlich oder unabsichtlich freigeschalten werden. Weiterhin besteht auch die Möglichkeit, dass eine Hardware-Plattform der elektronischen Schaltung durch entsprechende Manipulationen im externen Speicher bzw. im externen Massenspeicher zweckentfremdet wird. Daher werden insbesondere bei in solchen elektronischen Einrichtungen integrierten elektronischen Schaltanordnungen (z.B. CPUs, ASICs, FPGAs, System on Chips, Multi-Chip-Modulen etc.), von welchen beim Hochfahrablauf externe Speicher wie z.B. Flash-Speicher, etc. und/oder externe Massenspeicher genutzt werden, sichere Hochfahrablauf-Verfahren gesucht, um die elektronischen Systeme vor Manipulationen, Hacker-Attacken, etc. zu schützen.

Eine Möglichkeit, einen Hochfahrablauf eines elektronischen Systems sicherer zu gestalten, stellt beispielsweise ein so genanntes sicheres oder "secure" Boot-Verfahren dar, bei welchem eine kryptographische Prüfsumme der geladenen Anwendungslogik (Programmcode, Bitstream, Laufzeitkonfiguration etc.) überprüft wird, bevor sie ausgeführt bzw. aktiviert wird.

Aus DE 10 2013 224 365.0 ist ein Verfahren für einen sicheren Hochlaufablauf eines elektronischen Systems bekannt. Von einer Busüberwachungseinheit werden Zugriffsdaten während des Hochfahrablaufs überwacht und an eine Signaturbildungseinheit weitergeleitet. Dann wird über diese Zugriffsdaten eine Ist-Signatur ermittelt. Von der in der dritten Stufe des Hochfahrablaufs geladenen Anwendung wird eine Soll-Signatur in eine Registereinheit geschrieben und die von der Signaturbildungseinheit ermittelte Ist-Signatur mit der Soll-Signatur verglichen. Das erfindungsgemäße Verfahren stellt auf einfache Weise einen sicheren Hochfahrablauf dar, durch welchen nicht ohne detaillierte Kenntnisse der Hardware des elektronischen Systems manipuliert werden kann und eine zweckentfremdete Nutzung des elektronischen Systems verhindert wird. US9230112 offenbart ebenfalls ein Verfahren für einen sicheren Hochfahrablauf.

Es gibt Microcontroller und spezielle FPGAs (Flash FPGA, Anti-Fuse-FPGA) mit einem internem nicht-flüchtigem Speicher. Bei solchen Halbleiterbausteinen besteht das Problem eines kryptographischen Secure Boot nicht, da lediglich das Ändern des Halbleiterbaustein-internen Speichers gesperrt werden muss.

Bei komplexeren Halbleiterbausteinen bzw. Chips (Applikationsprozessoren, FPGAs, System on Chips) ist der Einsatz eines Secure Boot möglich. Dazu wird auf dem Chip in sogenannten eFuses, d.h. in einmalprogrammierbaren (one-time programmable, OTP) Speicherzellen, ein kryptographischer Schlüssel oder ein Hash-Wert des kryptographischen Schlüssels eingebrannt. Der Anwender kann damit zwar den kryptographischen Schlüssel konfigurieren, der zum Schutz eines Secure Boot verwendet wird. Das kryptographische Verfahren, das das Secure Boot realisiert, ist aber fest und kann vom Anwender daher nicht geändert oder selbst definiert werden. Auch betrifft die Überprüfung lediglich die Verifikation einer kryptographischen Prüfsumme.

Diese Einschränkungen eines festen Secure Boot betreffen speziell die erste Phase des oben erläuterten mehrstufigen Secure-Boot-Prozesses.

Der "feste" Secure Boot ist nachteilig, wenn besonders hohe Anforderungen an das Schutzniveau oder die Langzeittauglichkeit der eingesetzten kryptographischen Verfahren gestellt werden. Zudem können diese festen Implementierungen Schwachstellen enthalten.

### Darstellung der Erfindung

Der Erfindung liegt daher die Aufgabe zugrunde, eine Anordnung bzw. ein Verfahren anzugeben, durch welches die oben genannten Nachteile überwunden werden.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Ein Aspekt der Erfindung liegt in einer digitalen Schaltanordnung für einen sicheren Hochfahrablauf einer elektronischen Einrichtung (z.B. Gerät). Die Schaltanordnung weist zumindest eine Prozessoreinheit, ein Bussystem, zumindest eine Schnittstelle zum Anbinden zumindest einer externen Speichereinheit und zumindest einer Konfigurationsschnittstelle auf und ist
gekennzeichnet durch einen Anwender-programmierbaren Secure-Boot-Block mit zumindest einen internen nichtflüchtigen Speicher der Prozessoreinheit zum Speichern eines via der Konfigurationsschnittstelle konfigurierbaren bzw. änderbaren und während des Startens des sicheren Hochfahrablaufs ausführbaren Prüflogik (z.B. Programmcode, rekonfigurierbare Digitalschaltung), wobei
die Prüflogik derart via der Konfigurationsschnittstelle konfigurierbar oder konfiguriert ist, dass eine von der zumindest einen externen Speichereinheit geladene Anwendungslogik überprüfbar ist bzw. überprüft wird, und abhängig vom Überprüfungsergebnis aktivierbar und/oder auf der Prozessoreinheit ausführbar ist,
abhängig von der Programmierung der Prüflogik und abhängig von der durch die von dem Anwender definierten und im nichtflüchtigen Speicher geladenen Prüflogik beliebige Arten der Überprüfung durch den Anwender realisierbar sind.

Das heißt, die von der zumindest einen externen Speichereinheit geladene Anwendungslogik abhängig von der konfigurierten Prüflogik überprüft wird bzw. überprüft werden kann.

Der interne nichtflüchtige Speicher kann so eingerichtet sein, dass er gegen Inhaltsänderung und/oder -überschreiben durch einen Programmiervorgang dauerhaft sperrbar bzw. gesperrt ist. In einer Ausführungsform ist die Prüflogik löschbar. So kann sie bei einem erkannten Tampering gelöscht werden, um ein Reverse Engineering zu erschweren. In einer weiteren Ausführungsform lässt sich die Prüflogik selbst auch updaten bzw. aktualisieren. In diesem Fall werden in einer vorteilhaften Ausführung der Programmcode oder der oder die Bitstreams für die neue Prüflogik vor dem Update durch eine Teilfunktionalität der alten Prüflogik überprüft.

Durch den nichtflüchtigen internen Speicher wird einem Anwender jedoch ermöglicht, ein Secure Boot unter eigener Verantwortung aufzusetzen. Diese Flexibilität ermöglicht insbesondere, langzeittaugliche (Aktualisierung von kryptographischen Verfahren, Beheben von Schwachstellen / Fehlern in der Implementierung) und/oder hoch vertrauenswürdige Realisierungen umzusetzen.

Weiterhin können unterschiedliche Nutzer von baugleichen Halbleiterbausteinen dadurch unterschiedliche Implementierungen eines Secure Boots verwenden. Dadurch wird der Aufwand für einen Angreifer erhöht, da er ggf. die spezielle von einem bestimmten Anwender verwendete spezifische Secure-Boot-Implementierung angreifen muss und nicht eine vom Chip-Hersteller fest vorgegebene - wie eingangs erläutert - und damit auf allen Exemplaren identische Realisierung.

Die Prüflogik kann dazu eingerichtet sein, die geladene Anwendungslogik auf Zulässigkeit (digitale Signatur und ggf. Schlüssel) zu überprüfen. Optional kann die Anwendungslogik auch entschlüsselt werden. Dies hat den Vorteil, dass ein Anwender kryptographische Algorithmen, Schlüssellängen und deren Implementierung selbst vorgeben kann, d.h. unabhängig vom Hersteller des Halbleiterbausteins. Ein Anwender kann dabei auch mehrere Überprüfungen realisieren, z.B. unter Nutzung mehrerer Prüfsummen. Dies ermöglicht beispielsweise neben einer herkömmlichen digitalen Signatur (z.B. Rivest-Shamir-Adlemen RSA; Digital Signature Algorithm DSA, Elliptic Curve Digital Signature Algorithm ECDSA) eine weitere kryptographische Prüfsumme eines oder mehrerer Post-Quantum-sicherer kryptographischer Verfahren vorzunehmen (z.B. eXtended Merkle Signature Scheme XMSS, Leighton-Micali Signatures LMS, SPHINCS, SPHINCS+, BLISS, Rainbow Multivariate Equation Signature Scheme). Dies ermöglicht einem Anwender, unterschiedliche kryptographische Verfahren anzuwenden. So kann z.B. eine von einem externen Speicher geladene Firmware eine erste digital signierte Datenstruktur aufweisen, die angibt, welche Signaturverfahren derzeit noch zulässig sind. Die Anwendungslogik kann nicht mehr zulässige Signaturverfahren dauerhaft sperren. Weiterhin kann ein Anwender als Teil der Prüflogik einen Interpreter für einen virtuelle Maschine realisieren, wobei der Interpreter einen in der geladenen Applikationslogik enthaltenen Prüfcode für eine virtuelle Maschine (z.B. Forth, Java Virtual Machine) nach einer ersten Überprüfung ausführt, wobei der in der virtuellen Maschine ausgeführte Prüfcode eine Prüfung eines Teils der Applikationslogik vornimmt. Weiterhin kann ein Anwender Prüfungen abhängig von einem Gerätebetriebszustand, z.B. Fertigung, Inbetriebnahme, Betrieb, Diagnose, Out-of-Service etc. realisieren, sodass ein Anwender flexibel, abhängig vom vorgesehenen Gerätelebenszyklus, selbst definieren kann, in welchem Zustand des Gerätelebenszyklus welcher Programmcode ladbar ist. Es besteht ein Bedarf an derartigen flexiblen Prüfungen von geladener Anwendungslogik. Die Erfindung ermöglicht es einem Anwender, solche anwendungsspezifischen Prüfungen zuverlässig umzusetzen.

Die Anwendungslogik kann in mehreren Teilen geladen werden. Jeder Teil kann jeweils geprüft (und ggf. entschlüsselt) werden. Optional kann die Zulässigkeit eines Anwendungslogik-Teils von den während des Startvorgangs bereits geladenen und überprüften Anwendungslogikteilen abhängen.

Die Prüflogik kann dazu eingerichtet sein, für die geladene Anwendungslogik einen öffentlichen kryptographischen Schlüssel für den Start des sicheren Hochfahrablauf der elektronischen Einrichtung zu verwenden. Der öffentliche Schlüssel kann aus dem internen nichtflüchtigen Speicher ausgelesen werden. In einer Ausführungsform der Erfindung kann er von einem externen Speicher eingelesen werden und mittels einer im internen nichtflüchtigen Speicher hinterlegten Referenzinformation überprüft werden. In einer weiteren Ausführungsform kann er mittels einer im internen nichtflüchtigen Speicher gespeicherten Referenzinformation deterministisch gebildet werden.

Die Prüflogik kann dazu eingerichtet sein, die geladene Anwendungslogik inhaltlich auf Erreichen eines vorgebbaren Qualitätsmaßstabes zu überprüfen.

Weiterhin ist es möglich, dass die Prüflogik eine unzulässige geladene Anwendungslogik modifiziert, um sie in eine zulässige Anwendungslogik zu überführen. Dies kann auch als "Sanitization" bezeichnet werden. Dabei können z.B. unzulässige Abschnitte der Anwendungslogik überschrieben werden, oder es kann Programmcode um zusätzliche Laufzeit-Prüfcode erweitert werden. Der zusätzliche Prüfcode kann z.B. Speicherzugriffe oder indirekte Sprünge zur Laufzeit überprüfen. Weiterhin ist es möglich, eine Anwendungslogik durch die Prüflogik nach erfolgter Überprüfung zu randomisieren (nach Zufall zu verwürfeln), um ein Ausnutzen von ggf. vorhandenen Schwachstellen zu erschweren.

Die Prüflogik kann dazu eingerichtet sein, zusätzlich die Umgebung mit Schnittstelleneinheiten der Anwendungslogik zu überprüfen.

Ein weiterer Aspekt der Erfindung ist ein Betriebsverfahren für einen sicheren Hochfahrablauf einer elektronischen Einrichtung (z.B. Gerät), aufweisend eine elektronische Schaltanordnung mit zumindest einer Prozessoreinheit, einem Bussystem, zumindest einer Schnittstelle zum Anbinden zumindest einer externen Speichereinheit und zumindest einer Konfigurationsschnittstelle,
dadurch gekennzeichnet, dass
in einen Anwender-programmierbaren Secure-Boot-Block mit zumindest einen internen nichtflüchtigen Speicher der Prozessoreinheit eine via der Konfigurationsschnittstelle konfigurierbare bzw. änderbare und während des Startens des sicheren Hochfahrablaufs ausführbare Prüflogik bereitgestellt wird (z.B. Programmcode, rekonfigurierbare Digitalschaltung), wobei
die Prüflogik derart via der Konfigurationsschnittstelle konfigurierbar, änderbar ist oder konfiguriert, geändert wird, dass eine von der zumindest einen externen Speichereinheit geladene Anwendungslogik überprüft wird (überprüfbar ist), und abhängig vom Überprüfungsergebnis aktiviert wird und/oder auf der Prozessoreinheit ausgeführt wird, und
abhängig von der Programmierung der Prüflogik und abhängig von der durch die von dem Anwender definierten und im nichtflüchtigen Speicher geladenen Prüflogik beliebige Arten der Überprüfung durch den Anwender realisierbar sind.

Das Verfahren ist vorzugsweise computerimplementiert. Unter "computerimplementiert" kann im Zusammenhang mit der Erfindung eine Implementierung des Verfahrens verstanden werden, bei dem insbesondere ein Prozessor mindestens einen Verfahrensschritt ausführt.

Das Verfahren, die Anordnungen, Einrichtungen, Einheiten bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

Eine Weiterbildung der Erfindung sieht vor, dass
eine Einheit bzw. Komponente, insbesondere eine Kommunikationseinheit bzw. Netzwerkkomponente, als eine HardwareKomponente ausgebildet ist. Eine Einheit bzw. Komponente kann einen Prozessor umfassen. Subeinheiten einer größeren Einheit bzw. Hardwarekomponente können in Software, Firmware bzw. wiederum in Hardware implementiert sein.

Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

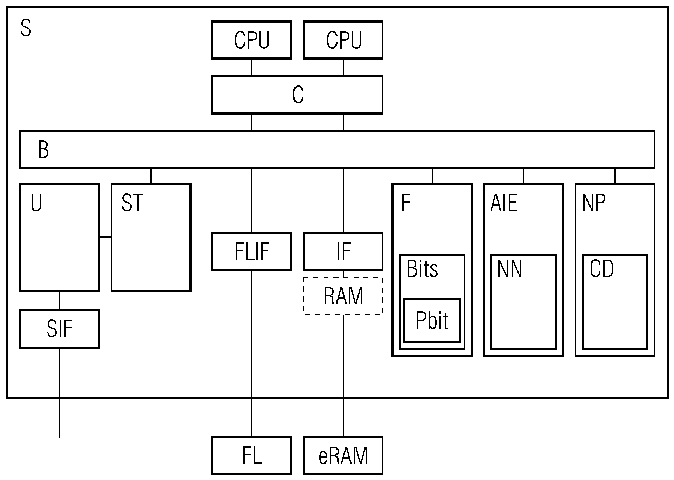

### Kurzbeschreibung der Zeichnung

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigt:
Die Figur eine mögliche Ausführungsform einer digitalen Schaltanordnung.

### Ausführungsbeispiele der Erfindung

Die Figur zeigt ein Beispiel für eine erfindungsgemäße digitale Schaltanordnung, vor allem einen (komplexen) Halbleiterbaustein (z.B. ASIC, System on Chip) mit mehreren Prozessoreinheiten CPU in Form von CPU-Kernen ggf. mit Cache-Speicher C, einem Bussystem B sowie Hardware-Beschleuniger-Einheiten wie FPGA Fabric F, Artficial Intellegence Inference Engine AIE und Network Processor NP. Diese Einheiten bzw. Komponenten benötigen eine Konfiguration in Form von Programmcode bzw. einer Bitstream/Bitfolge (Programmcode für eine CPU, Bitstream für einen FPGA, ggf. zusätzlich einen oder mehrere Partial Reconfiguration Bitstreams PBit für eine partielle Rekonfiguration zur Laufzeit des FPGAs, ein Neuronales-Netzwerk-Modell NN zur Auswertung (Inferenz) in einer Artificial Intelligence Inference Engine AIE, sowie Netzwerkprozessor-Programmcode CD für einen Netzwerkprozessor NP (zur Hardwarebeschleunigung der Bearbeitung von Netzwerkpaketen/Frames)).

Das Hochfahren des Halbleiterbausteins nach einem Reset oder Power-Up erfolgt von einer Chip Startup Engine ST. Dazu wird insbesondere entsprechender Programmcode bzw. Bitstream von einem externen Speichermedium, z.B. einen Flashspeicher FL oder einen RAM-Speicher eRAM, oder über eine Schnittstelle FLIF bzw. IF zum Anbinden einer solchen externen Speichereinheit geladen und aktiviert und/oder ausgeführt. Weiterhin kann zur Laufzeit weiterer Programmcode oder ein oder mehrere weitere Bitstreams nachgeladen werden. Mit anderen Worten ausgedrückt, kann die Anwendungslogik (Programmcode oder Bitstream) in mehreren Teilen geladen werden. Jeder Teil kann jeweils - wie nachstehend erläutert - geprüft (und ggf. entschlüsselt) werden. Optional kann die Zulässigkeit eines Anwendungslogik-Teils von den während des Startvorgangs bereits geladenen und überprüften Anwendungslogikteilen abhängen. Die Überprüfung kann beim erstmaligen Laden erfolgen. Ebenso kann sie wiederholt bei einem erneuten Laden, z.B. bei einer Rekonfiguration im laufenden Betrieb oder beim Laden von einem externen Speicher z.B. FL bzw. eRAM in einen internen Cache-Speicher z.B. C oder RAM-Speicher RAM des Halbleiterbausteins, erfolgen. Vorzugsweise erfolgt eine Überprüfung bei jedem Laden. Dies hat den Vorteil, dass eine Überprüfung nicht nur beim Startvorgang alleine erfolgt, sondern auch wenn im laufenden Betrieb eine Anwendungslogik erstmalig oder wiederholt in einen internen Speicher des Halbleiterbausteins zur Ausführung übertragen wird. Dabei ist es möglich, eine vollständige Überprüfung (z.B. kryptographische Prüfsumme und eine inhaltliche Qualitätsbewertung) beim erstmaligen Laden durchzuführen, und eine vereinfachte Prüfung bei einem wiederholten Laden im laufenden Betrieb. Dabei ist es möglich, die Ergebnisse bereits erfolgter Prüfungen zu speichern, z.B. über bereits eine bereits durchgeführte Qualitätsprüfung eines geladenen Programmcodes oder Bitstreams, um unnötige wiederholte Prüfungen zu vermeiden.

Erfindungsgemäß ist ein Anwender-programmierbarer Secure-Boot-Block vorgesehen. Die Chip Startup Engine aktiviert bzw. konfiguriert nur geladenen Programmcode bzw. Bitstreams, die von einer Prüflogik, welche in einem nichtflüchtigen Speicher des Anwender-programmierbarer Secure-Boot-Blocks U (User-Programmable Boot Engine) als zulässig bestätigt bzw. überprüft werden (und die ggf. von ihr entschlüsselt wurden). Dem Anwender-programmierbarer Secure-Boot-Block wird ein geladener Programmcode/Bitstream, d.h. eine Anwendungslogik, zur Überprüfung bereitgestellt. Erst nach erfolgter Überprüfung durch die Prüflogik wird er auf einem Prozessor (oder einem ähnlichen Ausführungseinheit, wie z.B. ein Netzwerkprozessor oder Artificial Intellgience Engine) des Halbleiterbausteins ausgeführt. Der Prüflogik wird dazu die geladene Anwendungslogik in ihrer Gesamtheit bereitgestellt (also z.B. nicht lediglich eine Prüfsumme, sondern der Programmcode oder Bitstream an sich). Abhängig von der Programmierung der Prüflogik können prinzipiell beliebige Arten der Überprüfung durch einen Anwender realisiert werden, abhängig von der durch die vom jeweiligen Anwender definierten und im nichtflüchtigen Speicher geladenen Prüflogik. Auf einem Prozessor des Halbleiterbausteins wird somit nur dann ein geladener Programmcode ausgeführt, wenn der von der Chip Startup Engine gemäß der im Anwender-programmierbarer Secure-Boot-Block nichtflüchtig konfigurierten Prüflogik als zulässig überprüft wurde, bzw. aktiv durch Modifikation in einen zulässige Anwendungslogik überführt wurde.

Die Prüflogik kann die geladene Anwendungslogik inhaltlich auf Erreichen eines vorgebbaren Qualitätsmaßstabes überprüfen. Die Prüflogik kann dazu eingerichtet sein, zusätzlich die Umgebung mit Schnittstelleneinheiten der Anwendungslogik zu überprüfen.

Es kann ein öffentlicher Schlüssel aus dem internen nichtflüchtigen Speicher ausgelesen werden. In einer weiteren Ausführungsform kann er von einem externen Speicher eingelesen werden und mittels eines im internen nichtflüchtigen Speicher hinterlegten Referenzinformation überprüft werden. In einer weiteren Ausführungsform kann er mittels einer im internen nichtflüchtigen Speicher gespeicherten Referenzinformation deterministisch gebildet werden.

Ein Anwender (User) kann über eine Konfigurationsschnittstelle SIE (Secure Boot Programming Interface) seinen eigenen Programmcode bzw. Digitalschaltungsdesign laden, das die Secure Boot Funktionalität realisiert. Dadurch kann ein Anwender unter eigener Verantwortung kryptographsiche Verfahren für ein Secure Boot realisieren (z.B. Unterstützung unterschiedlicher Kryptoalgorithmen).

Der interne nichtflüchtige Speicher kann so eingerichtet sein, dass er gegen Inhaltsänderung und/oder -überschreiben durch einen Programmiervorgang dauerhaft sperrbar bzw. gesperrt ist.

Der Vorteil liegt in der Vorbereitung von zusätzlichen Kryptoalgorithmen für Long-Term-Security, z.B. Post-Quantum Kryptoalgorithmen, Realisierung von zusätzlichen, sich aus dem Anwendungskontext ergebenden Prüfungen (z.B. Code-Analyse der Programmbinärdatei der nächsten Boot-Stufe), Anbindung an einen separaten, externen Crypto-Controller (z.B. Secure Boot erfolgt nur, nachdem der separate Crypto-Controller authentisiert ist, der Secure Boot Code auf dem Halbleiterbaustein kann einen externen Crypto Controller verwenden, um zusätzliche Prüfungen durchzuführen). Auch können, abhängig von einem Lebenszyklus der digitalen Schaltanordnung bzw. Halbleiterbausteins unterschiedliche Prüfungen erfolgen (bis hin zu einem temporären Sperren nach einem Fehler oder einem endgültigen Sperren nach einer Außerbetriebnahme). Dazu können im Secure-Boot-Block Fuses oder Zähler vorgesehen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Die Übertragungsvorrichtung kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Digitale Schaltanordnung (S) für einen sicheren Hochfahrablauf einer elektronischen Einrichtung, aufweisend zumindest eine Prozessoreinheit (CPU), ein Bussystem (B), zumindest einer Schnittstelle (FLIF; IF) zum Anbinden zumindest einer externen Speichereinheit (FL; eRAM) und zumindest einer Konfigurationsschnittstelle (SIF),
**gekennzeichnet durch** einen Anwender-programmierbaren Secure-Boot-Block mit zumindest einen internen nichtflüchtigen Speicher (U) der Prozessoreinheit (CPU) zum Speichern eines via der Konfigurationsschnittstelle (SIF) konfigurierbaren und während des Startens des sicheren Hochfahrablaufs ausführbaren Prüflogik, wobei
- die Prüflogik derart via der Konfigurationsschnittstelle (SIF) konfigurierbar, änderbar, konfiguriert oder geändert ist, dass eine von der zumindest einen externen Speichereinheit (FL; eRAM) geladene Anwendungslogik überprüfbar ist, und abhängig vom Überprüfungsergebnis aktivierbar und/oder auf der Prozessoreinheit (CPU) ausführbar ist, und
- abhängig von der Programmierung der Prüflogik und abhängig von der durch die von dem Anwender definierten und im nichtflüchtigen Speicher (U) geladenen Prüflogik beliebige Arten der Überprüfung durch den Anwender realisierbar sind.

2. Schaltanordnung nach dem vorhergehenden Anspruch, **dadurch gekennzeichnet, dass** die Prüflogik dazu eingerichtet ist, die geladene Anwendungslogik auf Zulässigkeit zu überprüfen.

3. Schaltanordnung nach einem der vorhergehenden Ansprüche, **dadurch gekennzeichnet, dass** die Prüflogik dazu eingerichtet ist, für die geladene Anwendungslogik einen öffentlichen kryptographischen Schlüssel für den Start des sicheren Hochfahrablauf der elektronischen Einrichtung zu verwenden.

4. Schaltanordnung nach einem der vorhergehenden Ansprüche, **dadurch gekennzeichnet, dass** die Prüflogik dazu eingerichtet ist, die geladene Anwendungslogik inhaltlich auf Erreichen eines vorgebbaren Qualitätsmaßstabes zu überprüfen.

5. Schaltanordnung nach dem vorhergehenden Anspruch, **dadurch gekennzeichnet, dass** die Prüflogik dazu eingerichtet ist, zusätzlich die Umgebung mit Schnittstelleneinheiten der Anwendungslogik zu überprüfen.

6. Schaltanordnung nach einem der vorhergehenden Ansprüche, **dadurch gekennzeichnet, dass** der interne nichtflüchtige Speicher so eingerichtet ist, dass er gegen Inhaltsänderung und/oder -überschreiben durch einen Programmiervorgang dauerhaft sperrbar ist.

7. Betriebsverfahren für einen sicheren Hochfahrablauf einer elektronischen Einrichtung, aufweisend eine elektronische Schaltanordnung (S) mit zumindest einer Prozessoreinheit (CPU), einem Bussystem (B), zumindest einer Schnittstelle (FLIF; IF) zum Anbinden zumindest einer externen Speichereinheit (FL; eRAM) und zumindest einer Konfigurationsschnittstelle (SIF),
**dadurch gekennzeichnet, dass**
in einen Anwender-programmierbaren Secure-Boot-Block mit zumindest einen internen nichtflüchtigen Speicher (U) der Prozessoreinheit (CPU) eine via der Konfigurationsschnittstelle (SIF) konfigurierbare und während des Startens des sicheren Hochfahrablaufs ausführbare Prüflogik bereitgestellt wird, wobei
- die Prüflogik derart via der Konfigurationsschnittstelle (SIF) konfigurierbar, änderbar, konfiguriert oder geändert dass eine von der zumindest einen externen Speichereinheit (FL; eRAM) geladene Anwendungslogik überprüft wird, und abhängig vom Überprüfungsergebnis aktiviert wird und/oder auf der Prozessoreinheit (CPU) ausgeführt wird, und
- abhängig von der Programmierung der Prüflogik und abhängig von der durch die von dem Anwender definierten und im nichtflüchtigen Speicher (U) geladenen Prüflogik beliebige Arten der Überprüfung durch den Anwender realisierbar sind.

8. Betriebsverfahren nach dem vorhergehenden Anspruch, **dadurch gekennzeichnet, dass** die Prüflogik die geladene Anwendungslogik auf Zulässigkeit überprüft.

9. Betriebsverfahren nach einem der vorhergehenden Ansprüche 7 oder 8, **dadurch gekennzeichnet, dass** die Prüflogik für die geladene Anwendungslogik einen öffentlichen kryptographischen Schlüssel für den Start des sicheren Hochfahrablauf der elektronischen Einrichtung verwendet.

10. Betriebsverfahren nach einem der Ansprüche 7-9, **dadurch gekennzeichnet, dass** die Prüflogik die geladene Anwendungslogik inhaltlich auf Erreichen eines vorgebbaren Qualitätsmaßstabes überprüft.

11. Betriebsverfahren nach dem vorhergehenden Anspruch, **dadurch gekennzeichnet, dass** die Prüflogik zusätzlich die Umgebung mit Schnittstelleneinheiten der Anwendungslogik überprüft.

## Claims

1. Digital switching arrangement (S) for a secure boot process of an electronic device, having at least one processor unit (CPU), a bus system (B), at least one interface (FLIF; IF) for the connection of at least one external storage unit (FL; eRAM) and at least one configuration interface (SIF), **characterized by** a user-programmable secure boot block with at least one internal non-volatile memory (U) of the processor unit (CPU) for storing check logic able to be configured via the configuration interface (SIF) and able to be executed during the start of the secure boot process, wherein
- the check logic is able to be configured, able to be modified, is configured or is modified via the configuration interface (SIF) such that application logic loaded from the at least one external storage unit (FL; eRAM) is able to be checked, and is able to be activated and/or able to be executed on the processor unit (CPU) depending on the check result, and
- depending on the programming of the check logic and depending on the check logic defined by the user and loaded in the non-volatile memory (U), the user is able to carry out any desired types of check.

2. Switching arrangement according to the preceding claim, **characterized in that** the check logic is configured to check the admissibility of the loaded application logic.

3. Circuit arrangement according to either of the preceding claims, **characterized in that** the check logic is configured, for the loaded application logic, to use a public cryptographic key to start the secure boot process of the electronic device.

4. Switching arrangement according to one of the preceding claims, **characterized in that** the check logic is configured to check the content of the loaded application logic in terms of achieving a predefinable quality metric.

5. Circuit arrangement according to the preceding claim, **characterized in that** the check logic is configured to additionally check the environment with interface units of the application logic.

6. Switching arrangement according to one of the preceding claims, **characterized in that** the internal non-volatile memory is configured such that it is able to be permanently locked against content modification and/or overwriting by a programming process.

7. Operating method for a secure boot process of an electronic device, having an electronic switching arrangement (S) with at least one processor unit (CPU), a bus system (B), at least one interface (FLIF; IF) for the connection of at least one external storage unit (FL; eRAM) and at least one configuration interface (SIF),
**characterized in that**
provision is made, in a user-programmable secure boot block with at least one internal non-volatile memory (U) of the processor unit (CPU), for check logic able to be configured via the configuration interface (SIF) and able to be executed during the start of the secure boot process, wherein
- the check logic is able to be configured, able to be modified, is configured or is modified via the configuration interface (SIF) such that application logic loaded from the at least one external storage unit (FL; eRAM) is checked, and is activated and/or executed on the processor unit (CPU) depending on the check result, and
- depending on the programming of the check logic and depending on the check logic defined by the user and loaded in the non-volatile memory (U), the user is able to carry out any desired types of check.

8. Operating method according to the preceding claim, **characterized in that** the check logic checks the admissibility of the loaded application logic.

9. Operating method according to either of preceding Claims 7 and 8, **characterized in that** the check logic, for the loaded application logic, uses a public cryptographic key to start the secure boot process of the electronic device.

10. Operating method according to one of Claims 7-9, **characterized in that** the check logic checks the content of the loaded application logic in terms of achieving a predefinable quality metric.

11. Operating method according to the preceding claim, **characterized in that** the check logic additionally checks the environment with interface units of the application logic.

## Revendications

1. Agencement de commutation numérique (S) pour un processus de démarrage fiable d'un dispositif électronique, comprenant au moins une unité de processeur (CPU), un système de bus (B), au moins une interface (FLIF ; IF) pour la connexion d'au moins une unité de mémoire externe (FL ; eRAM) et d'au moins une interface de configuration (SIF),
**caractérisé par** un Secure-Boot-Block programmable par l'utilisateur, avec au moins une mémoire interne non volatile (U) de l'unité de processeur (CPU) pour l'enregistrement d'une logique de contrôle configurable par l'intermédiaire de l'interface de configuration (SIF) et exécutable pendant le démarrage du processus de démarrage fiable, dans lequel
- la logique de contrôle peut être configurée, peut être modifiée, est configurée ou modifiée par l'intermédiaire de l'interface de configuration (SIF) de façon à ce qu'une logique d'application chargée par l'au moins une unité de mémoire externe (FL ; eRAM) puisse être vérifiée et activée et/ou exécutée sur l'unité de processeur (CPU) en fonction du résultat de la vérification et
- en fonction de la programmation de la logique de contrôle et en fonction de la logique de contrôle définie par l'utilisateur et chargée dans la mémoire non volatile (U), différents types de vérification peuvent être réalisés par l'utilisateur.

2. Agencement de commutation selon la revendication précédente, **caractérisé en ce que** la logique de contrôle est conçue pour vérifier la fiabilité de la logique d'application chargée.

3. Agencement de commutation selon l'une des revendications précédentes, **caractérisé en ce que** la logique de contrôle est conçue pour utiliser, pour la logique d'application chargée, une clé cryptographique publique pour le démarrage du processus de démarrage fiable du dispositif électronique.

4. Agencement de commutation selon l'une des revendications précédentes, **caractérisé en ce que** la logique de contrôle est conçue pour vérifier si le contenu de la logique d'application atteint un niveau de qualité prédéterminé.

5. Agencement de commutation selon la revendication précédente, **caractérisé en ce que** la logique de contrôle est conçue pour vérifier en outre l'environnement avec des unités d'interface de la logique d'application.

6. Agencement de commutation selon l'une des revendications précédentes, **caractérisé en ce que** la mémoire interne non volatile est conçue de façon à ce qu'elle puisse être bloquée durablement contre une modification et/ou un écrasement du contenu par un processus de programmation.

7. Procédé de fonctionnement pour un processus de démarrage fiable d'un dispositif électronique, comprenant un agencement de commutation électronique (S) avec au moins une unité de processeur (CPU), un système de bus (B), au moins une interface (FLIF ; IF) pour la connexion d'au moins une unité de mémoire externe (FL ; eRAM) et au moins une interface de configuration (SIF),
**caractérisé en ce que**
dans un Secure-Boot-Block programmable par l'utilisateur, avec au moins une mémoire interne non volatile (U) de l'unité de processeur (CPU), est mise à disposition une logique de contrôle configurable par l'intermédiaire de l'interface de configuration (SIF) et exécutable pendant le démarrage du processus de démarrage fiable, dans lequel
- la logique de contrôle peut être configurée, peut être modifiée, est configurée ou modifiée par l'intermédiaire de l'interface de configuration (SIF) de façon à ce qu'une logique d'application chargée par l'au moins une unité de mémoire externe (FL ; eRAM) puisse être vérifiée et activée et/ou exécutée sur l'unité de processeur (CPU) en fonction du résultat de la vérification et
- en fonction de la programmation de la logique de contrôle et en fonction de la logique de contrôle définie par l'utilisateur et chargée dans la mémoire non volatile (U), différents types de vérification peuvent être réalisés par l'utilisateur.

8. Procédé de fonctionnement selon la revendication précédente, **caractérisé en ce que** la logique de contrôle vérifie la fiabilité de la logique d'application.

9. Procédé de fonctionnement selon l'une des revendications 7 ou 8 précédentes, **caractérisé en ce que** la logique de contrôle utilise, pour la logique d'application chargée, une clé cryptographique publique pour le démarrage du processus de démarrage fiable du dispositif électronique.

10. Procédé de fonctionnement selon l'une des revendications 7 - 9, **caractérisé en ce que** la logique de contrôle vérifie si le contenu de la logique d'application chargée atteint un niveau de qualité prédéterminé.

11. Procédé de fonctionnement selon la revendication précédente, **caractérisé en ce que** la logique de contrôle vérifie en outre l'environnement avec des unités d'interfaces de la logique d'application.
